# EUROPEAN PATENT SPECIFICATION

(11) **EP 0 297 993 B1**
(45) Date of publication and mention of the grant of the patent: **24.03.1993**
(21) Application number: 88401712.0
(22) Date of filing: 01.07.1988
(51) Int. Cl.: B24B 9/14

(54) **Lens grinding apparatus**
Linsen-Schleifvorrichtung
Dispositif de meulage de lentilles

(30) Priority: 02.07.1987 JP 166643/87
(43) Date of publication of application: 04.01.1989
(73) Proprietor: Kabushiki Kaisha TOPCON, Tokyo (JP)
(72) Inventor: Isokawa, Nobuhiro, Itabashi-ku Tokyo (JP); Hatano, Yoshiyuki, Itabashi-ku Tokyo (JP); Uno, Shinji, Itabashi-ku Tokyo (JP); Watanabe, Takahiro, Itabashi-ku Tokyo (JP); Suzuki, Yasuo, Itabashi-ku Tokyo (JP); Kuwano, Shigeki, Itabashi-ku Tokyo (JP)
(74) Representative: Mongrédien, André

(56) References cited:
- EP-A- 0 143 468
- EP-A- 0 196 114
- EP-A- 0 205 033
- GB-A- 2 170 130
- US-A- 4 383 393

## Description

### BACKGROUND OF THE INVENTION

### Field of the Invention

This invention relates to a lens grinding apparatus, in which the edge (the periphery of a lens) of a lens is ground by at least two kinds of V-edge or V-beveling grinders depending on the degree of the lens.

### Description of the Prior Art

As for V-edge or V-bevelling grinders (hereinafter referred to as the "V-edge grinder(s)" ) for the use in this kind of lens grinding apparatus, there are two types; one is a medium V-edge grinder which is used for grinding a lens having a comparatively thin edge thickness and the other is a small V-edge grinder which is used for grinding a lens having a comparatively thick or heavy edge thickness. The medium V-edge grinder has a comparatively large V-edge width and a comparatively deep V-edge groove, whereas the small V-edge grinder has a comparatively small V-edge width and a comparatively shallow V-edge groove.

In order to grinder a lens using such medium V-edge grinder as mentioned, the lens is subjected to free grinding treatment in which the lens is ground its peripheral portion along its front or rear surface. More specifically, in case of a minus lens, a V-edge treatment can be given to the peripheral portion of the minus lens by subjecting the lens to the grinding treatment along the curve of its front surface. In case of a plus lens, a V-edge treatment can be given to the peripheral portion of the plus lens by subjecting the lens to the grinding treatment along the curve of its rear surface. In general, a V-edge treatment can be given to the peripheral portion of a lens by subjecting the lens to a free grinding treatment using a medium V-edge grinder.

However, if the degree of a lens becomes stronger, the edge thickness of the lens becomes heavier. Likewise, if a strong astigmia is applied to the lens, the edge thickness thereof becomes partly heavier.

Moreover, if such lens is subjected to a V-edge treatment using a medium V-edge grinder in order to form a V-shaped portion in section in the peripheral portion of the lens, a comparatively long V-shaped portion is formed in the central portion side of the lens. Due to the foregoing, when the V-edge portion of the lens is fitted in the annular lens mounting groove having a V-shape in section formed in the lens mounting part of a spectacle frame, the V-shapedly treated portion of the lens is projected from the lens mounting groove at the center side of the lens. As a result, an undesirable gap is produced between an inclined surface of the V-shapedly treated portion and the frame. Particularly, since this gap becomes large and exposed at the front side of the lens, the outer appearance is badly spoiled.

Therefore, in case a V-edge treatment is applied to a lens having such heavy edge thickness as mentioned, in order to prevent the projection of the V-edge portion from the lens mounting groove when the V-edge portion is fitted in the lens mounting groove, the length of the V-edge portion is made short in the direction toward the center side of the lens using a small V-edge grinder.

There are some examples of means for measuring the edge thickness used for the V-edge grinding treatment as set forth hereunder.

As one example, there is an edge thickness measuring means for measuring the edge thickness per each radius vector of a lens in such a manner as that fillers having a conical inclined surface are each abutted against a front and a rear edges of a lens which has been subjected to a coarse grinding treatment and the moving amount of the filters is electrically detected.

As another example (see GB-A-2 170 130), there is an edge thickness measuring means including a frame configuration measuring means for digital measuring the configuration of the lens mounting part of a spectacle frame as radius vector information and two fillers. Moreover, the edge thickness measuring means of the type in which a lens before grinding is held between two opposite fillers in accordance with a lens configuration data from a frame configuration measuring means and the fillers are moved in the radius direction per the meridian of the lens before grinding, thereby to anticipate and measure the edge thickness per each radius vector, which will be obtained when the lens is roughly ground in accordance with a lens frame configuration data from the moving amount of the fillers in the direction parallel to the optical axis of the lens.

As a further example, there is a edge thickness measuring means of the type in which a roughly ground lens is abutted against a V-groove, i.e., a V-edge groove is measured the edge thickness regarding its plurality of radius vector from the falling amount of the lens when the front and rear extreme ends of the edge of the lens are abutted against the V-groove and the angle of V-groove already known.

In any of the above-mentioned types of edge thickness measuring means, the V-edging curve, or the V-edging position is automatically found through calculation in accordance with the edge thickness information obtained by it and the moving amount of the carriage in the lens axis direction during the V-edge grinding treatment is automatically controlled.

However, although the edge thickness of a lens can be automatically measured in the manner as mentioned, it is the actual situation that the selection of either a medium V-edge grinder or a small V-edge grinder is entirely made based on operator's experiences and sensitivity. And, in order to perform the V-edging treatment upon selection of a suitable grinder by dropping the peripheral portion of the lens into the V-edge groove of the V-edge grinder which the operator desires, it is required to provide a selection switch which is to be operated by the operation, or otherwise it is required for the operator perform such work as to directly and manually drop the peripheral portion of the lens into the V-edge groove of the desired V-edge grinder.

Thus, it is shown in US-A-4 383 393 a lens grinding apparatus which corresponds to the prior art portion of claim 1 and in which a coarse grinding wheel, two V-shaped semi-finishing grinding wheels and a V-shaped finishing grinding wheel are coaxially mounted. A carriage controlled by a stepping motor permits to move the lens axially from the coarse grinding wheel to one of the semi-finishing grinding wheels, and then to the finishing grinding wheel. However, the choice between both semi-finishing grinding wheels must be decided by the operator.

Since it takes not only much time and labor but also much skill for selecting such a medium V-edge grinder, or a small V-edge grinder and for dropping the lens into the V-edge groove after the selection of a suitable grinder, the conventional procedure is inconvenient. In addition, the selection of the suitable grinder is sometimes made incorrectly.

### SUMMARY OF THE INVENTION

It is therefore the object of the present invention to provide a lens grinding apparatus, in which the edge thickness of a lens can be measured, a series of procedure starting from selecting either a medium V-edge grinder, or a small V-edge and ending in subjecting the lens to the grinding treatment of the selected grinder can be automatically performed, as a result, the operator can save much time and labor for learning the grinding art or selecting a suitable kind of grinder by his own judgement and in addition, the operator's careless incorrect selection can be prevented before it occurs.

In order to achieve the above-mentioned object, a lens grinding apparatus according to the present invention comprising a carriage which can be driven both in the vertical and lateral directions, a pair of lens shafts mounted on the carriage as such that a lens to be ground can be held between the lens shafts, a coarse grinding wheel disposed under the lens shafts as such that the axis of the coarse grinding wheel is parallel with the lens shafts, at least two kinds of V-edge grinders coaxial with the coarse grinder and each having a V-shaped grinding groove of a different width, and an edge thickness measuring system adapted to measure the edge thickness of the lens held between the lens shafts, whereby the lens grinding apparatus includes a machining selection circuit which is activated in accordance with a sequence program of a sequence memory and which is adapted to select either one of said two kinds of V-edge grinders with reference to the maximum edge thickness of the lens measured by said edge thickness measuring system so as to subject the lens, which has been roughly ground by the coarse grinding wheel, to the treatment of the selected V-edge grinder.

The edge thickness measuring system includes an edge thickness detecting section for detecting the edge thickness with reference to a plurality of radius vectors of the lens corresponding to the rotating angles of the lens shafts, an edge thickness memory for storing the edge thickness per each radius vector detected by the edge thickness detecting section, a calculating section for calculating the lateral moving amount of the carriage during the grinding treatment of the lens with reference to the edge thickness of the lens corresponding to each rotating angle of the lens shafts, and a lateral moving amount memory for storing the lateral moving amount per each rotating angle of the lens shafts calculated by the calculating section.

The machining selection circuit includes a reference value memory for storing a reference value as a machining selection reference which is used for selecting either one of the two kinds of V-edge grinders so that the lens will be subjected to the treatment of the selected grinder, a maximum edge thickness extracting circuit for extracting the maximum edge thickness from the edge thickness memory, a comparator for comparing the maximum edge thickness value extracted by the edge thickness detecting section with the reference value stored in the reference value memory, and a drive control circuit which is activated in accordance with a sequence program of the sequence memory, and adapted to select either one of the two kinds of V-edge grinders in accordance with a signal from the comparator, to control the lateral movement of the carriage so as to position the lens above the selected V-edge grinder and to move the carriage downward so as to subject the lens to the treatment of the V-edge grinder.

The two kinds of V-edge grinders comprise a medium V-edge grinder having a large groove width and a small V-edge grinder having a small groove width. The medium V-edge grinder and the small V-edge grinder are disposed in this order coaxis with the coarse grinding wheel. The comparator is established as that it outputs a signal when the maximum edge thickness value extracted by the edge thickness detecting section is larger than the reference value stored in the reference value memory and it outputs no signal when the maximum edge thickness value extracted by the edge thickness detecting section is smaller than the reference value stored in the reference value memory.

The drive control circuit is adapted to move the carriage in the lateral direction by a moving amount Y upon input of the signal from the comparator so as to move the lens onto the medium V-edge grinder. The machining selection circuit includes an add circuit adapted to calculate, when a signal is not input in the drive control circuit from the comparator, the moving amount Yᵢ + Y_{D} obtained by adding the moving amount Yᵢ and the center-to-center dimension Y_{D} in the width direction of the medium V-edge grinder and the small V-edge grinder and cause the drive control circuit to move the carriage in the lateral direction with reference to the moving amount Yᵢ + Y_{D} so as to move the lens onto the small V-edge grinder.

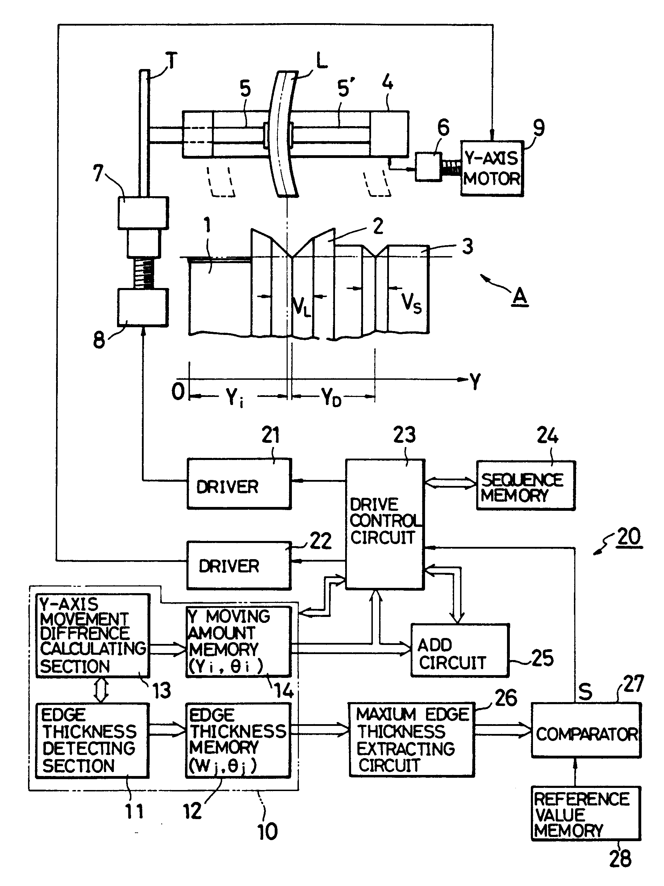

Other objects and further features of the present invention will become manifest to those skilled in the art from the following detailed description taken in conjunction with the accompanying drawing.

### BRIEF DESCRIPTION OF THE ATTACHED DRAWING

The single figure in the drawing is a block diagram showing one embodiment of the present invention.

### DESCRIPTION OF THE PREFERRED EMBODIMENT

The single figure illustrates a block diagram showing one embodiment of the present invention.

A machining system A of a lens grinding apparatus according to this embodiment includes a coarse grinding wheel 1 known per se, a so-called medium V-edge grinder 2 having a V-edge width V_{L} and a small V-edge grinder 3 having a V-edge width V_{S} (W_{L} > W_{S}). A lens-to-be-ground L is held between a pair of lens rotating shafts 5 and 5′ of a carriage 4. The lens rotating shaft 5 is provided with a template T attached to one end thereof. The template T is abutted against a template table 7 known per se. The lens L is machined or ground copying the configuration of the template T.

The template table 7 is vertically moved by a template table vertically moving motor 8. When the template table 7 is vertically moved by the motor 8, the template T, the rotating shafts 5,5′, the lens L, the carriage 4, etc. are likewise vertically moved. The carriage 4 is moved in the Y-axis direction (the direction of the axis of the lens rotating shafts), i.e., in the lateral direction by a Y-axis motor 9 mechanically connected to the carriage 4.

Accordingly, in order to move the lens L to a position above any one of the coarse grinding wheel 1, the medium V-edge grinder 2 and the small V-edge grinder 3, the template table 7 is moved upward by the template table vertically moving motor 8 first, then the carriage 4 is moved in the Y-axis direction by the Y-axis motor 9 to move the lens L to a predetermined position and thereafter, the template table 7 is moved downward by the template table vertically moving table 8.

The motors 8 and 9 are controlled by a drive control circuit 23 through drivers 21 and 22. An edge thickness measuring system 10 is of the conventional type as disclosed, for example, in Japanese patent application No. Sho 62-62033. Please refer to this Japanese patent application for detailed constitution and function thereof. The edge thickness (Wj, ϑⱼ)[j=1,2,3...,J] per each radius vector detected by an edge thickness detecting section 11 is stored in an edge thickness memory 12. The edge thickness measuring system 10 includes a Y-axis movement difference calculating section 13. Accordingly, the moving amount in the Y-axis direction (hereinafter referred to as the "Y-movement difference") during the treatment of V-edge grinding of the lens L is calculated per each rotating angle of the lens rotating shafts 5 and 5′ automatically from the detected edge thickness (Wⱼ, ϑⱼ) or with reference to a V-edge curve value input by the operator, and (Yᵢ, ϑᵢ)[i=0,1,2,3,.....I(I > J)] is stored in a Y moving amount memory 14.

The present invention includes a machining selection circuit 20 for automatically selecting either one of the medium V-edge grinder 2 and the small V-edge grinder 3 with reference to the detected edge thickness of the lens L during the machining so that the lens L can be subjected to the treatment of the selected grinder.

The constitution as well as the function of the machining selection circuit 20 will be described hereunder.

The the drive control circuit 23 of the machining selection circuit 20 controls the driver 22 in accordance with the program of the sequence memory 24 storing a sequence program so as to subject the lens L to the rough treatment of the coarse grinding wheel 1. Upon completion of the rough grinding, the edge thickness measuring system 10 detects the edge thickness (Wⱼ, ϑⱼ) of the lens L and calculates the lateral moving amount or Y moving amount (Yᵢ, ϑᵢ).

And, upon completion of the calculation, the drive control circuit 23 controls the driver 21 so as to actuate the template table vertically moving motor 8 to move the template table 7 upward, thereby to move away the lens L upward from the coarse grinding wheel 1. Thereafter, the drive control circuit 23 keeps controlling the driver 22 for moving the carriage 4 in the Y-axis direction until the lens L is brought to a predetermined position above the medium V-edge grinder 2 as illustrated.

Then, the maximum edge thickness extracting circuit 26 extracts the edge thickness data (Wⱼ, ϑⱼ) stored in the edge thickness memory 12 of the edge thickness measuring system 10 and outputs the maximum edge thickness data to the comparator 27. The comparator 27 compares a predetermined value, e.g., W̅ = 4 mm, stored in the reference value memory 28 with the maximum edge thickness W_{L} and outputs, in case W̅ < W_{L}, a signal S to the drive control circuit 23.

The drive control circuit 23, when the signal S is not input from the comparator 27, is activated in accordance with the sequence program of the sequence program memory 24 and drive controls the motor 9 through the driver 22 in accordance with the data (Yᵢ, ϑᵢ)(initial value: Yₒ, ϑₒ) of the Y moving amount memory 14 of the edge thickness measuring system 10 so as to move, the lens L from the position above the coarse grinding wheel 1 to a position above the medium V-edge grinder 2 by a moving amount Yᵢ and thereafter, drive controls the template table vertically moving motor 8 through the driver 21 to move the lens L down onto the medium V-edge grinder 2 so that the V-edge grinding is started.

Every time the lens L is rotated by radius vector angle ϑ; by a lens rotating shaft driving motor not shown, the Y-axis motor 9 moves the carriage 4 in the Y-axis direction with reference to the Y moving amount Yᵢ to subject to the lens L to the V-edge treatment.

On the other hand, upon input of the signal S from the comparator 27, the drive control circuit 23 controls the add circuit 25 so as to add the Y moving amount Yᵢ (initial value: Yₒ) of the Y moving memory 14 to a distance Y_{D} established as a design value between the vertex of the V-edge groove of the medium V-edge grinder and the vertex of the V-edge groove of the small V-edge grinder and drives the motor 9 in accordance with the add data (Yᵢ+ Y_{D}) (initial value: Yₒ + Y_{D}) to move the lens L to a position above the small V-edge grinder 3 and then drives the motor 8 to move the lens L down onto the small V-edge grinder 3 so that the lens L is subjected to the V-edge treatment by the small V-edge grinder 3.

Every time the lens L is rotated by radius vector angle ϑᵢ, the drive control circuit 23 controls the add circuit 25 to add Y_{D} to the Yᵢ moving amount Y and controls the Y-axis motor 9 with reference to the add data (lateral moving amount) Yᵢ + Y_{D} to subject the lens L to V-edge treatment.

The edge thickness measuring system 10 may be of the type disclosed in Japanese patent application No. Sho 58-225198 and Japanese patent application No. Sho 60-115080. In that case, the machining system may be constituted as such as disclosed in these applications.

Since the present invention is constituted as such as described in the foregoing, the measurement of the edge thickness of the lens, the selection of the medium V-edge grinder or the small V-edge grinder and the subjection of the lens to the V-edge treatment can be automatically performed. Therefore, much time and labor can be saved for the operator to lean the machining art and to select one of the suitable grinders or the like. As a result, the operator's possible inccorrect selection can be prevented before it occurs.

## Claims

1. A lens grinding apparatus comprising
a carriage (4) which can be driven both in the vertical and lateral directions;
a pair of lens shafts (5,5') mounted on said carriage as such that a lens (L) to be ground can be held between said lens shafts;
a coarse grinding wheel (1) disposed under said lens shafts as such that the axis of said coarse grinding wheel is parallel with said lens shafts;
at least two kinds of V-edge grinders (2,3) coaxial with said coarse grinding wheel and each having a V-shaped grinding groove of a different width,
CHARACTERIZED IN THAT said lens grinding apparatus includes
an edge thickness measuring system (10) adapted to measure the edge thickness of the lens held between said lens shafts, and a machining selection circuit (20) which is activated in accordance with a sequence program of a sequence memory (24) and which is adapted to select either one of said two kinds of V-edge grinders (2,3) with reference to the maximum edge thickness of the lens measured by said edge thickness measuring system (10) so as to subject the lens, which has been roughly ground by said coarse grinding wheel (1), to the treatment of the selected V-edge grinder.

2. A lens grinding apparatus according to claim 1, wherein said edge thickness measuring system (10) includes an edge thickness detecting section (11) for detecting the edge thickness with reference to a plurality of radius vectors of the lens corresponding to the rotating angles of said lens shafts, an edge thickness memory (12) for storing the edge thickness per each radius vector detected by said edge thickness detecting section, a calculating section (13) for calculating the lateral moving amount of the carriage during the grinding treatment of the lens with reference to the edge thickness of the lens corresponding to each rotating angle of said lens shafts, and a lateral moving amount memory (14) for storing the lateral moving amount per each rotating angle of said lens shafts calculated by said calculating section.

3. A lens grinding apparatus according to claim 2, wherein said machining selection circuit (20) includes a reference value memory (28) for storing a reference value as a machining selection reference which is used for selecting either one of the two kinds of V-edge grinders so that the lens will be subjected to the treatment of the selected grinder, a maximum edge thickness extracting circuit (26) for extracting the maximum edge thickness from said edge thickness memory, a comparator (27) for comparing the maximum edge thickness value extracted by said edge thickness detecting section with the reference value stored in said reference value memory, and a drive control circuit (23) which is activated in accordance with a sequence program of said sequence memory, and adapted to select either one of the two kinds of V-edge grinders in accordance with a signal (S) from said comparator, to control the lateral movement of the carriage so as to position the lens above the selected V-edge grinder and to move the carriage downward so as to subject the lens to the treatment of the V-edge grinder.

4. A lens grinding apparatus according to claim 3, wherein said two kinds of V-edge grinders comprise a medium V-edge grinder (2) having a large groove width and a small V-edge grinder (3) having a small groove width, said medium V-edge grinder and said small V-edge grinder are disposed in this order coaxis with said coarse grinding wheel (1), said comparator (27) is established as that it outputs a signal when the maximum edge thickness value extracted by said edge thickness detecting section (11) is larger than the reference value stored in said reference value memory (28) and it outputs no signal when the maximum edge thickness value extracted by said edge thickness detecting section is smaller than the reference value stored in said reference value memory;
said drive control circuit (23) is adapted to move the carriage in the lateral direction by a moving amount Yᵢ upon input of the signal from said comparator (27) so as to move the lens onto the medium V-edge grinder, and
said machining selection circuit (20) includes an add circuit (25) adapted to calculate, when a signal is not input in said drive control circuit from said comparator, the moving amount Yᵢ + Y_{D} obtained by adding the moving amount Yᵢ and the center-to-center dimension Y_{D} in the width direction of said medium V-edge grinder and said small V-edge grinder and cause said drive control circuit to move the carriage in the lateral direction with reference to the moving amount Yᵢ + Y_{D} so as to move the lens onto said small V-edge grinder.

## Patentansprüche

1. Linsen-Schleifvorrichtung mit
einem Schlitten (4), der sowohl in vertikaler als auch in seitlicher Richtung angetrieben werden kann;
einem Paar von derart auf dem Schlitten befestigten Linsenwellen (5,5'), daß eine zu schleifende Linse (L) zwischen den Linsenwellen gehalten werden kann;
einem Grobschleifrad (1), das so unter den Linsenwellen angeordnet ist, daß die Achse des Grobschleifrades parallel zu den Linsenwellen ist;
wenigstens zwei Arten von mit dem Grobschleifrad koaxialen V-Kantenschleifern (2,3), von denen jeder eine V-förmige Schleifnut von unterschiedlicher Breite hat,
**dadurch gekennzeichnet,**
daß die Linsen-Schleifvorrichtung enthält:
ein Kantendicken-Meßsystem (10), das geeignet ist zur Messung der Kantendicke der zwischen den Linsenwellen gehaltenen Linse, und einen Schaltkreis (20), der gemäß einem Folgeprogramm eines Folgespeichers (24) aktiviert wird und der geeignet ist, eine der beiden Arten von V-Kantenschleifern (2,3) auszuwählen mit Bezug auf die von dem Kantendicken-Meßsystem (10) gemessene maximale Kantendicke der Linse, um die Linse, die von dem Grobschleifrad (1) grob geschliffen wurde, der Behandlung des ausgewählten V-Kantenschleifers zu unterwerfen.

2. Linsen-Schleifvorrichtung nach Anspruch 1, worin das Kantendicken-Meßsystem (10) enthält:
einen Kantendicken-Erfassungsabschnitt (11) zur Erfassung in bezug auf eine Mehrzahl von Radiusvektoren der Linse entsprechend den Drehwinkeln der Linsenwellen, einen Kantendicken-Speicher (12) zum Speichern der Kantendicke für jeden vom Kantendicken-Erfassungsabschnitt erfaßten Radiusvektor, einen Berechnungsabschnitt (13) zum Berechnen der Seitenbewegungsgröße des Schlittens während der Schleifbehandlung der Linse mit Bezug auf die Kantendicke der Linse entsprechend jedem Drehwinkel der Linsenwellen, und einen Seitenbewegungsgrößen-Speicher (14) zum Speichern der Seitenbewegungsgröße für jeden Drehwinkel der Linsenwellen, die vom Berechnungsabschnitt berechnet wurde.

3. Linsen-Schleifvorrichtung nach Anspruch 2, worin der Bearbeitungsauswahl-Schaltkreis (20) enthält:
einen Bezugswert-Speicher (28) zum Speichern eines Bezugswertes als Bearbeitungsauswahlbezug, der verwendet wird zur Auswahl einer der beiden Arten von V-Kantenschleifern, so daß die Linse der Behandlung durch den ausgewählten Schleifer unterworfen wird, einen Maximumkantendicken-Extraktionsschaltkreis (26) zum Herausziehen der maximalen Kantendicke aus dem Kantendicken-Speicher, ein Vergleichsglied (27) zum Vergleich des von dem Kantendicken-Erfassungsabschnitt herausgezogenen Kantendicken-Maximalwertes mit dem im Bezugswert-Speicher gespeicherten Bezugswert, und einen Antriebssteuer-Schaltkreis (23), der gemäß einem Folgeprogramm des Folgespeichers aktiviert wird und geeignet ist zur Auswahl einer der beiden Arten von V-Kantenschleifern entsprechend einem Signal (S) vom Vergleichsglied zur Steuerung der Seitenbewegung des Schlittens, um die Linse oberhalb des ausgewählten V-Kantenschleifers zu positionieren, und zur Abwärtsbewegung des Schlittens, um die Linse der Behandlung durch den V-Kantenschleifer zu unterziehen.

4. Linsen-Schleifvorrichtung nach Anspruch 3, worin die beiden Arten von V-Kantenschleifern einen mittleren V-Kantenschleifer (2) mit einer großen Nutenbreite und einen kleinen V-Kantenschleifer (3) mit einer kleinen Nutenbreite aufweist, wobei der mittlere V-Kantenschleifer und der kleine V-Kantenschleifer in dieser Reihenfolge koaxial mit dem Grobschleifrad (1) angeordnet sind, das Vergleichsglied (27) so ausgebildet ist, daß es ein Signal ausgibt, wenn der von dem Kantendicken-Erfassungsabschnitt (11) herausgezogene Kantendicken-Maximalwert größer als der im Bezugswert-Speicher (28) gespeicherte Bezugswert ist, und kein Signal ausgibt, wenn der von dem Kantendicken-Erfassungsabschnitt herausgezogene Kantendicken-Maximalwert kleiner als der im Bezugswert-Speicher gespeicherte Bezugswert ist;
der Antriebssteuer-Schaltkreis (23) geeignet ist zur Bewegung des Schlittens in seitlicher Richtung um eine Bewegungsgröße Yᵢ bei Eingabe des Signals vom Vergleichsglied (27), um die Linse auf den mittleren V-Kantenschleifer zu bewegen, und
der Bearbeitungsauswahl-Schaltkreis (20) einen Addier-Schaltkreis (25) enthält, der geeignet ist zur Berechnung, wenn ein Signal vom Vergleichsglied dem Antriebssteuer-Schaltkreis nicht zugeführt wird, der Bewegungsgröße Yᵢ + Y_{D}, die erhalten wird durch Addition der Bewegungsgröße Yᵢ und der Mitte-zu-Mitte-Abmessung Y_{D} in der Breitenrichtung des mittleren V-Kantenschleifers und des kleinen V-Kantenschleifers, und der bewirkt, daß der Antriebssteuer-Schaltkreis den Schlitten in der seitlichen Richtung bewegt mit Bezug auf die Bewegungsgröße Yᵢ + Y_{D}, um die Linse auf den kleinen V-Kantenschleifer zu bewegen.

## Revendications

1. Dispositif de meulage de lentilles, comprenant
un chariot (4) qui peut être entraîné dans les directions tant verticale que latérale ;
une paire d'arbres (5, 5') porte-lentilles montés, sur ledit chariot, de telle sorte qu'une lentille (L) à meuler puisse être maintenue entre lesdits arbres porte-lentilles ;
un disque (1) de meulage grossier, disposé au-dessous desdits arbres porte-lentilles de façon telle que l'axe dudit disque de meulage grossier soit parallèle auxdits arbres porte-lentilles ;
au moins deux types de meules (2, 3) à dépouilles en V, coaxiales audit disque de meulage grossier et dont chacune présente une dépouille de meulage en V d'une largeur différente, caractérisé par le fait que ledit dispositif de meulage de lentilles comprend
un système (10) mesureur d'épaisseurs marginales, conçu pour mesurer l'épaisseur marginale de la lentille retenue entre lesdits arbres porte-lentilles, et
un circuit (20) de sélection d'usinages qui est activé en concordance avec un programme séquentiel d'une mémoire séquentielle (24) et est conçu pour sélectionner l'un ou l'autre des deux types précités de meules (2, 3) à dépouilles en V, en référence avec l'épaisseur marginale maximale de la lentille, mesurée par ledit système (10) mesureur d'épaisseurs marginales, de façon à soumettre la lentille, qui a été dégrossie par meulage au moyen dudit disque (1) de meulage grossier, à l'action de la meule sélectionnée à dépouille en V.

2. Dispositif de meulage de lentilles, selon la revendication 1, dans lequel ledit système (10) mesureur d'épaisseurs marginales comprend une unité (11) de détection d'épaisseurs marginales, pour détecter l'épaisseur marginale en référence avec une pluralité de vecteurs radiaux de la lentille correspondant aux angles de rotation desdits arbres porte-lentilles ; une mémoire (12) d'épaisseurs marginales, pour mémoriser l'épaisseur marginale correspondant à chaque vecteur radial et détectée par ladite unité de détection d'épaisseurs marginales ; une unité de calcul (13), pour calculer la course de déplacement latéral du chariot au cours du processus de meulage de la lentille, en référence avec l'épaisseur marginale de la lentille correspondant à chaque angle de rotation desdits arbres porte-lentilles ; et une mémoire (14) de courses de déplacements latéraux, pour mémoriser la course de déplacement latéral correspondant à chaque angle de rotation desdits arbres porte-lentilles et calculée par ladite unité de calcul.

3. Dispositif de meulage de lentilles, selon la revendication 2, dans lequel ledit circuit (20) de sélection d'usinages comprend une mémoire (28) de valeurs de référence, pour mémoriser une valeur de référence en tant que référence de sélection d'usinage qui est utilisée pour sélectionner l'un des deux types de meules à dépouilles en V, de telle sorte que la lentille puisse être soumise à l'action de la meule sélectionnée ; un circuit (26) d'extraction d'épaisseurs marginales maximales, pour extraire l'épaisseur marginale maximale de ladite mémoire d'épaisseurs marginales ; un comparateur (27) pour comparer la valeur d'épaisseur marginale maximale, extraite par ladite unité de détection d'épaisseurs marginales, à la valeur de référence mémorisée dans ladite mémoire de valeurs de référence ; et un circuit (23) de commande d'entraînement qui est activé en concordance avec un programme séquentiel de ladite mémoire séquentielle et est conçu pour sélectionner l'un ou l'autre des deux types de meules à dépouilles en V, en concordance avec un signal (S) provenant dudit comparateur, pour commander le déplacement latéral du chariot en vue de positionner la lentille au-dessus de la meule sélectionnée à dépouille en V, et pour déplacer le chariot vers le bas en vue de soumettre la lentille à l'action de la meule à dépouille en V.

4. Dispositif de meulage de lentilles, selon la revendication 3, dans lequel les deux types précités de meules à dépouilles en V comprennent une meule (2) à dépouille en V moyenne, présentant une grande largeur de dépouille, et une meule (3) à petite dépouille en V, présentant une faible largeur de dépouille ; ladite meule à dépouille en V moyenne et ladite meule à petite dépouille en V sont agencées, dans l'ordre précité, coaxialement audit disque (1) de meulage grossier ; ledit comparateur (27) est conçu de telle sorte qu'il délivre un signal lorsque la valeur d'épaisseur marginale maximale, extraite par ladite unité (11) de détection d'épaisseurs marginales, est supérieure à la valeur de référence mémorisée dans ladite mémoire (28) de valeurs de référence, et qu'il ne délivre aucun signal lorsque la valeur d'épaisseur marginale maximale, extraite par ladite unité de détection d'épaisseurs marginales, est inférieure à la valeur de référence mémorisée dans ladite mémoire de valeurs de référence ;
ledit circuit (23) de commande d'entraînement est conçu pour déplacer le chariot d'une course de déplacement Yᵢ dans la direction latérale, lors de l'entrée du signal provenant dudit comparateur (27), de façon à déplacer la lentille jusque sur la meule à dépouille en V moyenne ; et
ledit circuit (20) de sélection d'usinages renferme un circuit additionneur (25) conçu pour calculer, lorsqu'aucun signal provenant dudit comparateur n'est entré dans ledit circuit de commande d'entraînement, la course de déplacement Yᵢ + Y_{D} obtenue en ajoutant la course de déplacement Yᵢ et la dimension entre axes Y_{D} dans le sens de la largeur de ladite meule à dépouille en V moyenne et de ladite meule à petite dépouille en V, et pour faire en sorte que ledit circuit de commande d'entraînement déplace le chariot dans la direction latérale en référence avec la course de déplacement Yᵢ + Y_{D}, afin de déplacer la lentille jusque sur ladite meule à petite dépouille en V.
